# NEUE EUROPÄISCHE PATENTSCHRIFT

(11) **EP 1 863 664 B2**
(45) Veröffentlichungstag und Bekanntmachung des Hinweises auf die Entscheidung über den Einspruch: **28.08.2013**
(45) Hinweis auf die Patenterteilung: 18.11.2009
(21) Anmeldenummer: 06722710.8
(22) Anmeldetag: 29.03.2006
(51) Int. Cl.: B60J 1/20, B60R 5/04

(54) **ROLLOANORDNUNG MIT ENDLAGENDÄMPFUNG**
ROLLER-BLIND SYSTEM WITH DAMPENED FINAL POSITION
SYSTEME DE STORE A AMORTISSEUR DE POSITION EXTREME

(30) Priorität: 29.03.2005 DE 102005014173
(43) Veröffentlichungstag der Anmeldung: 12.12.2007
(73) Patentinhaber: Webasto AG, 82131 Stockdorf (DE)
(72) Erfinder: BIECKER, Peter, 82041 Oberhaching (DE)
(74) Vertreter: Bosch, Matthias
(86) Internationale Anmeldenummer: PCT/DE2006/000558
(87) Internationale Veröffentlichungsnummer: WO 2006/102878

(56) Entgegenhaltungen:
- EP-A1- 0 919 854
- EP-A1- 1 223 081
- DE-A1- 10 207 704
- DE-A1- 10 242 173
- DE-A1- 10 326 307
- DE-A1- 19 806 736
- DE-U1- 9 203 450
- DE-U1- 20 207 318
- DE-U1-202004 015 030
- US-A- 4 482 137

## Beschreibung

Die Erfindung betrifft eine Rolloanordnung, gemaβ dem Oberbegriff des Anspruchs 1.

Eine solche gattungsgemäße Rolloanordnung ist beispielsweise aus der DE 102 42 173 A1 bekannt. Die dort beschriebene Rolloanordnung ist für den Einsatz für eine Heckscheibe eines Kraftfahrzeuges vorgesehen und weist wenigstens einen Schwenkarm auf, der zum Aufspannen des Rollos dient und mit einem Ende im Bereich der Wickelwelle angelenkt ist. Das andere Ende des Schwenkarms ist als verlagerbarer Schwenkpunkt zwangsgeführt, der beim Übergang von einer Schwenkarm-Aufspannstellung in eine Schwenkarm-Grundstellung nach einem vorgebbaren Verlagerungsweg mit einem vorzugsweise als Federelement ausgebildeten Dämpfungselement abstützbar ist. Die Rolloanordnung ermöglicht ein definiertes und geschwindigkeitsreduziertes Einfahren des Rollos in die Rollo-Verstauposition am Ende des Aufwickelvorganges. Diese Eigenschaft wird ohne Einsatz eines elektrischen Steuergerätes lediglich durch das Vorsehen des Federelementes erreicht. Da dieses als Dämpfungselement wirkende Federelement nur in einem begrenzten Bereich, d.h. in einem vorgebbaren, letzten Teilstückbereich des Verlagerungsweges des verlagerbaren Schwerpunktes wirkt, kann das Rollo zu Beginn des Aufwickelvorganges über einen mit der Wickelwelle gekoppelten Antriebsmotor schnell und zügig aufgerollt werden und lediglich in einem bezüglich eines Einfahren kritischen letzten Teilstücks eine Geschwindigkeitsreduzierung durch Wirken der Federkraft als Dämpfung das Einfahren des letzten Rolloteilbereichs mit der gewünschten reduzierten Geschwindigkeit ermöglichen.

Das Dämpfungselement ist bei dieser Ausgestaltung als Druckfeder ausgebildet, wobei die Geschwindigkeitsreduzierung in Abhängigkeit von dem Antriebsmotor und/oder der Federrate und/oder der wirksamen Länge der Feder beim Komprimieren individuell und beliebig vorgebbar ist.

Diese Anordnung weist den Nachteil auf, dass das Auf und Abwickeln des Rollostoffs lediglich unter Verwendung eines Antriebsmotors erfolgen kann, welcher die Rolloanordnung in ihrer Verstauposition gegen die Kraft des Federelementes halten kann. Weiterhin bewirkt das Federelement beim Abwickeln des Rollostoffs von der Wickelwelle zu Beginn des Abwickelvorganges ein geschwindigkeitserhöhtes Abwickeln, was gegebenenfalls unerwünscht sein kann. Darüber hinaus bedingt die Rolloanordnung ein Gestänge in Form zumindest eines Schwenkarmes zwischen der Wickelwelle und einer am freien Rolloende angeordneten Zugstange, was die Rolloanordnung für den Einsatz als Laderaumabdeckung unflexibel und damit unpraktikabel macht.

Die DE 102 07 704 A1 zeigt eine Aufrollvorrichtung für ein folienartiges Element mit einem Aufnahmegehäuse an dessen einem Ende eine Kappe befestigt ist. In dem Aufnahmegehäuse sind eine Aufrollwelle zum Aufrollen des folienartigen Elements und eine Treibeinrichtung zum Drehen und Treiben der Aufrollwelle in einer Richtung vorgesehen. An einem Endabschnitt der Aufrollwelle ist eine Kupplungsvorrichtung vorgesehen, durch die die Aufrollwelle bei Aufrollen des folienartigen Elements mit einer Dämpfungseinrichtung verbunden wird. Beim Abrollen wird die Verbindung zwischen der Aufrollwelle und der Dämpfungseinrichtung durch die Kupplungseinrichtung unterbrochen.

Die DE 202 07 318 U1 zeigt eine Sonnenblendenvorrichtung mit einem Dämpfer zum sanften Einziehen einer Abschirmung. Es ist eine Zahnradanordnung beschrieben, bei der ein Zahnrad entlang seiner Drehachse linear bewegt wird, sodass es mit einem anderen Zahnrad in Eingriff gelangt, um in einem bestimmten Bereich einer Bewegung der Sonnenblende eine Dämpfung zu erzielen.

Aufgabe der vorliegenden Erfindung ist es deshalb, eine Rolloanordnung, insbesondere eine Laderaumabdeckung für den Laderaum eines Fahrzeuges, anzugeben, mit der ein verbessertes geschwindigkeitsreduziertes Einfahren des Rollos am Ende des Aufwickelvorganges möglich ist.

Diese Aufgabe wird durch eine Rolloanordnung mit den Merkmalen des Patentanspruches 1 gelöst. Vorteilhafte Ausgestaltungen ergeben sich aus den abhängigen Patentansprüchen.

Der Grundgedanke der vorliegenden Erfindung besteht darin, die Geschwindigkeitsreduktion des Rollostoffes beim Aufwickeln durch direktes Beeinflussen der Drehgeschwindigkeit der Wickelwelle zu beeinflussen, wodurch sich eine mechanisch besonders einfache Konstruktion der Rolloanordnung ergibt. Insbesondere ist es möglich, den auf einer Wickelwelle zwischen einer Abdeckposition und einer Verstauposition aufwickelbaren Rollostoff federgetrieben aufzuwickeln. Damit lässt sich eine konstruktiv einfache und kostengünstige Anordnung bereitstellen.

Bei der erfindungsgemäßen Rolloanordnung, insbesondere Laderaumabdeckung für den Laderaum eines Fahrzeugs, mit einem Rollostoff, der auf einer Wickelwelle zwischen einer Abdeckposition und einer Verstauposition aufwickelbar ist, ist eine Dämpfungsvorrichtung vorgesehen, das zum definierten, geschwindigkeitsreduzierten Einfahren des Rollostoffs in die Verstauposition am Ende eines Aufwickelvorganges dient. Erfindungsgemäß ist die Dämpfungsvorrichtung dazu ausgebildet, die Drehgeschwindigkeit der Wickelwelle zu verringern, und die Drehung der Wickelwelle innerhalb eines vorgegebenen Drehwinkels der Wickelwelle zum Stillstand zu bringen.

Die erfindungsgemäße Dämpfungsvorrichtung zeichnet sich dabei dadurch aus, dass der von dem Rollostoff zurückgelegte Weg, innerhalb dem eine Dämpfung, d.h. eine definierte Geschwindigkeitsreduktion erfolgen soll, frei und beliebig einstellbar ist. Der Dämpfungsweg beim Einfahren des Rollostoffs von der Abdeckposition in die Verstauposition ist damit von dem eingestellten Drehwinkel der Wickelwelle abhängig, innerhalb dem eine Dämpfung erfolgt. Der Drehwinkel kann kleiner als 360° sein, womit die Dämpfung bei weniger als einer Drehung der Wickelwelle erfolgt. Der Drehwinkel kann jedoch auch mehrere vollständige Umdrehungen der Wickelwelle umfassen.

Die Dämpfungsvorrichtung umfasstein Dämpfungsmittel, dass ein in der Wickelwelle angeordneter Torsions-Viskodämpfer mit einem ersten Bauteil und einem zweiten gegen das erste Bauteil verdrehbaren Bauteil ist, wobei das erste Bauteil, gegen Verdrehung gesichert, an einem Karosseriebauteil befestigt ist und das zweite Bauteil zur Übertragung eines Drehmomentes in Wirkverbindung mit der Wickelwelle bringbar ist. Die Verwendung eines Torsions-Viskodämpfers ermöglicht eine besonders raumsparende Anordnung, da sämtliche für die zu erzielende Dämpfung notwendigen mechanischen Komponenten innerhalb der Wickelwelle anordenbar sind. Ein Torsions-Viskodämpfer weist darüber hinaus den Vorteil auf, dass eine Wirkverbindung zu Bauteilen außerhalb der Wickelwelle, z.B. ein Gestänge, das sich im Flächenbereich der Rolloanordnung erstreckt, entbehrlich ist.

Erfindungsgemäß ist vorgesehen, dass die Wirkverbindung zwischen der Wickelwelle und dem zweiten Bauteil des Torsions-Viskodämpfers durch ein mit der Wickelwelle drehfest verbundenes Endstück und eine Anzahl an gegenüber der Wickelwelle verdrehbaren Schaltscheiben herstellbar ist. Durch das mit der Wickelwelle drehfest verbundene Endstück wird ein Drehmoment auf das Dämpfungsmittel ausgeübt. Der Zeitpunkt, zu dem das Drehmoment an das Dämpfungsmittel übertragen wird, hängt dabei von der Anzahl der gegenüber der Wickelwelle verdrehbaren Schaltscheiben ab. Jede Schaltscheibe ist für eine Verzögerung der Übertragung des Drehmoments von dem mit der Wickelwelle verbundenen Endstück auf das Dämpfungsmittel ursächlich. Je geringer die Anzahl der zwischen dem Endstück und dem Dämpfungsmittel angeordneten Schaltscheiben ist, desto eher findet eine Dämpfung, ausgehend von der Abdeckposition, beim Einfahren des Rollostoffs statt. Umgekehrt findet eine Dämpfung erst am Ende eines Aufwickelvorganges statt, je mehr Schaltscheiben vorgesehen sind. Die Schaltscheiben werden bevorzugt im Inneren der Wickelwelle angeordnet.

Zur Übertragung des von der Wickelwelle ausgeübten Drehmoments weist jede der Schaltscheiben an ihren beiden, den angrenzenden Scheiben gegenüberliegenden Seiten Nasen auf, die zur Übertragung des Drehmoments auf die jeweilige Nase der jeweils nächsten Schaltscheibe ausgebildet sind.

Bevorzugt weisen die Nasen dabei die Gestalt eines Kreissektors mit einem gegebenen Nasen-Winkel auf, so dass bei einer Momentenübertragung ein flächiger Kontakt zwischen der Nase einer Schaltscheibe und der Nase der jeweils nächsten Schaltscheibe hergestellt ist. Auf diese Weise ist sichergestellt, dass auch hohe Drehmomente zuverlässig über die jeweiligen Schaltscheiben zu dem Dämpfungsmittel übertragen werden.

Es ist weiterhin vorgesehen, dass die Anzahl der Schaltscheiben und die Gestalt der Nasen, insbesondere der Nasen-Winkel der kreissektorförmigen Nasen, von dem gewünschten zu dämpfenden Weg beim Einzug des Rollostoffs von der Abdeckposition in die Verstauposition am Ende eines Abwickelvorganges abhängig ist. Durch eine geeignete Wahl der Anzahl der Schaltscheiben in Verbindung mit der Gestalt der Nasen, kann damit festgelegt werden, nach wie viel Umdrehungen der Wickelwelle, ausgehend von der Abdeckposition des Rollostoffs, der Beginn der Dämpfung erfolgen soll.

Je geringer der Nasen-Winkel ist, desto größer ist der Umdrehungswinkel der Wickelwelle, bis eine Momentenübertragung von einer Schaltscheibe auf die jeweils nächste Schaltscheibe erfolgt. Die Größe des Nasen-Winkels bemisst sich neben der Einstellung des Dämpfungswegs und der Dämpfungslänge auch nach Stabilitätskriterien, so dass die Momentenübertragung von der Wickelwelle auf das Dämpfungsmittel ohne die Gefahr der Beschädigung einer Nase erfolgen kann.

Eine weitere Ausgestaltung sieht vor, dass das zweite Bauteil des Torsions-Viskodämpfers eine Nase aufweist, die zwischen einer Ausgangsstellung und einer Endstellung verdrehbar ist und bei Verdrehung eine Dämpfung der Drehung der Wickelwelle bewirkt, wobei eine Verdrehung von der Ausgangsstellung in die Endstellung durch Eingriff mit einer Nase einer der Schaltscheiben erfolgt. Durch die Festlegung der Ausgangsstellung und der Endstellung wird der Verdrehwinkel der Wickelwelle festgelegt, innerhalb der eine Dämpfung bis zum vollständigen Stillstand der Wickelwelle erfolgt. Das zweite Bauteil des Torsions-Viskodämpfers kann als Schaltscheibe interpretiert werden, welche durch Verdrehung gegenüber dem ersten Bauteil eine Dämpfung bis zum völligen Stillstand der Wickelwelle erfährt.

In einer weiteren Ausgestaltung ist ein Rückstellmittel vorgesehen, das das Dämpfungsmittel in einen Ausgangszustand versetzt, wenn der Rollostoff von seiner Verstauposition in die Abdeckposition gebracht wird, so dass beim nächsten Einfahren des Rollostoffs von der Abdeckposition in die Verstauposition die definierte Geschwindigkeitsreduktion bereitgestellt ist. Das Rückstellmittel wirkt somit der beim Aufwickelvorgang auftretenden Dämpfung in einem definierten Bereich entgegen. Die Kraft des Rückstellmittels ist jedoch nicht ausreichend, das insbesondere federgetriebene Aufwickeln des Rollostoffs auf die Wickelwelle zu verhindern. Wird der Rollostoff von seiner Verstauposition jedoch wieder in seine Abdeckposition gebracht - sei es mechanisch oder elektromotorisch - so sorgt das Rückstellmittel dafür, dass das Dämpfungsmittel in einen solchen definierten Ausgangszustand zurückversetzt wird, dass bei jedem Aufwickelvorgang des Rollostoffs die Dämpfung zum vorbestimmten Zeitpunkt bzw. über eine vorbestimmte Strecke erfolgt.

Es ist dabei vorteilhaft, wenn das Rückstellmittel das zweite Bauteil des Torsions-Viskodämpfers von der Endstellung in die Ausgangsstellung bringt, wenn der Rollostoff von seiner Verstauposition in die Abdeckposition gebracht wird. Das Rückstellmittel steht somit in Wirkverbindung mit dem zweiten Bauteil des Torsions-Viskodämpfers und dreht dieses in seine Ausgangsstellung zurück. Dies geschieht besonders einfach dadurch, dass das Rückstellmittel als Schenkelfeder ausgebildet ist, die konzentrisch zu dem Dämpftungsmittel angeordnet ist und das erste, drehfest gelagerte Bauteil des Torsions-Viskodämpfers umschließt.

In einer weiteren Ausgestaltung ist ferner vorgesehen, dass das Rückstellmittel auf das zweite Bauteil des Torsions-Viskodämpfers eine Vorspannkraft ausübt, wenn das zweite Bauteil sich in seiner Ausgangsstellung befindet. Durch die Vorspannung ist sichergestellt, dass das Rückstellmittel das Dämpfungsmittel auch gegen die in Rückstellrichtung wirkende Dämpfung in seine Ausgangsstellung verbringen kann.

Die Erfindung wird nachfolgend anhand eines Ausführungsbeispieles näher erläutert.
Es zeigen:
- Figur 1: eine perspektivische Darstellung einer Wickelwelle, in der ein erfindungsgemäßer Dämpfungsmechanismus angeordnet ist,
- Figur 2: eine Draufsicht auf eine Schaltscheibe des Dämpfungsmechanismus,
- Figur 3: eine perspektivische Ansicht des in der Erfindung verwendeten Dämpfungsmittels in einer Ausgangsstellung, und
- Figur 4: eine perspektivische Ansicht des in der Erfindung verwendeten Dämpfungsmittels in einem eine Dämpfung bewirkenden Betriebszustand.

In den nachfolgenden Figuren sind gleiche Merkmale mit gleichen Bezugszeichen versehen.

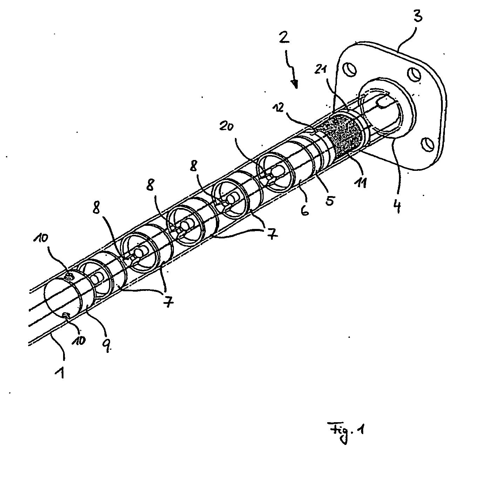

In Figur 1 sind in einer perspektivischen Ansicht die zum definierten, geschwindigkeitsreduzierten Einfahren eines (in der Figur nicht dargestellten) Rollostoffs in eine Verstauposition am Ende eines Aufwickelvorgangs notwendigen Komponenten einer Rolloanordnung dargestellt. Obwohl aus der Figur nicht ersichtlich, lässt sich eine Rolloanordnung in bekannter Weise zwischen einer Abdeckposition und einer Verstauposition anordnen, indem der Rollostoff auf einer Wickelwelle 1 aufgewickelt wird. Die Rolloanordnung, bildet insbesondere eine Laderaumabdeckung für den Laderaum eines Fahrzeugs aus. Die Rolloanordnung kann jedoch auch in beliebigen anderen Einsatzbereichen Anwendung finden, wie z.B. als Rolloanordnung für eine Scheibe eines Fahrzeugs oder ein Fenster.
Das Aufwickeln der Rolloanordnung erfolgt gemäß dem Ausführungsbeispiel der Erfindung bevorzugt unter Verwendung eines Federantriebs (nicht dargestellt), der in bekannter Weise im Inneren einer Wickelwelle 1 angeordnet sein kann. Das Abrollen des Rollostoffs von der Wickelwelle 1, d.h. von seiner Verstauposition in die Abdeckposition, kann manuell durch einen Benutzer der Rolloanordnung oder elektromotorisch erfolgen.

In Figur 1 sind die für das definierte, geschwindigkeitsreduzierte Einfahren des Rollostoffs in seine Verstauposition am Ende des Aufwickelvorganges notwendigen Komponenten dargestellt. Die Wickelwelle 1 ist über ein Drehlager 4 mit einem an einem Karosseriebauteil zu befestigenden Befestigungselement 3 drehbar verbunden. Innerhalb der Wickelwelle 1 ist ein Endstück 9 angeordnet, das mittels eines Befestigungselements 10, z.B. einer Schraube oder einem Stift, drehfest mit der Wickelwelle 1 verbunden ist. Ein als Dämpfungsmittel 2 dienender Torsions-Viskodämpfer ist in einem Endbereich der Wickelwelle 1 nahe dem karosseriefesten Befestigungselement 3 angeordnet.

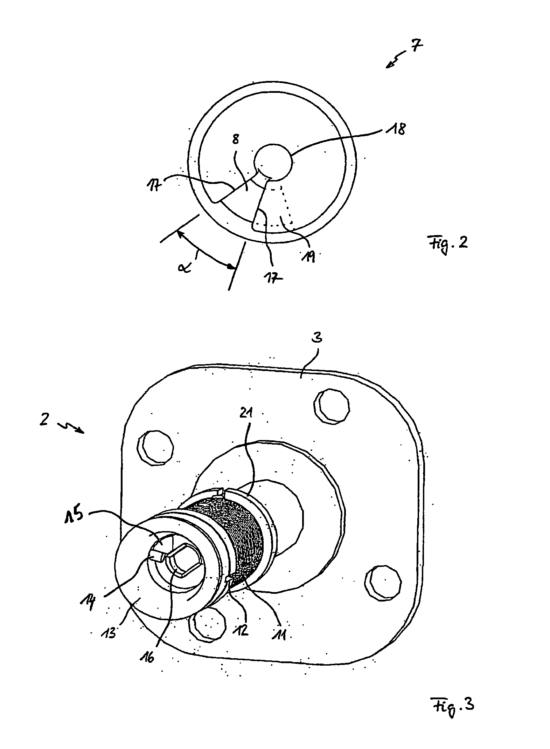

Zwischen dem Endstück 9 und dem Torsions-Viskodämpfer 2 ist eine Anzahl an Schaltscheiben 7 vorgesehen. Jede der Schaltscheiben 7 weist auf ihrer Vorder- und Rückseite eine kreissektorförmig ausgebildete Nase 8 auf. In Figur 2 ist die Draufsicht auf eine Vorderseite einer derartigen Schaltscheibe 7 gezeigt. Die Nase 8 weist einen Nasen-Winkel α und zwei gegenüberliegende Sektorflächen 17 auf. Auf der Rückseite der Schaltscheibe 7 ist eine identisch ausgebildete Nase 19 vorgesehen.

Die Nase 19 kann prinzipiell an einer beliebigen Stelle der Rückseite der Schaltscheibe 7 angeordnet sein. Nachdem die Schaltscheibe 7 bevorzugt aus einem mittels Spritzguss hergestellten Kunststoff besteht, ist es vorteilhaft, die auf der Vorder- und Rückseite angeordneten Nasen 8,19 nicht gegenüberliegend, sondern wie in Figur 2 gezeigt, versetzt zueinander anzuordnen, um Materialanhäufungen zu vermeiden. Die Schaltscheibe 7 ist um eine Drehachse 18 in der Wickelwelle 1 drehbar gehaltert.

Entgegen der zeichnerischen Darstellung, sind die Schaltscheiben 7 nicht in der in Figur 1 gezeigten Weise voneinander beabstandet, sondern grenzen unmittelbar aneinander, so dass jeweilige Sektorflächen 17 einer auf der Vorderseite angeordneten Nase mit einer Sektorfläche einer auf der Rückseite der benachbarten Schaltscheibe angeordneten Nase in Eingriff bringbar sind. Obwohl in Figur 1 auch nicht erkennbar, weist das drehfest mit der Wickelwelle 1 verbundene Endstück 9 eine entsprechend geformte Nase auf der der ersten Schaltscheibe 7 zugewandten Seite auf.

An einem Gehäuseteil 6 des Torsions-Viskodämpfers 2, welches fest mit einem Gehäuseteil 5 verbunden ist, ist eine entsprechend den vorher beschriebenen Nasen 8 der Schaltscheibe 7 geformte Nase 20 ausgebildet. Das Gehäuseteil 6 und das Gehäuseteil 5, die auch einstückig ausgebildet sein können, ist gegenüber einem weiteren, aus der Figur nicht sichtbaren Bauteil des Torsions-Viskodämpfers 2 verdrehbar, wobei letzteres drehfest mit dem Befestigungselement 3 und damit dem Karosseriebauteil verbunden ist. Eine durch Momentenbeaufschlagung erzeugte Drehung des Gehäuseteils 6 gegenüber dem nicht drehbaren Bauteil des Torsions-Viskodämpfers erzeugt die gewünschte Dämpfung.

Beim Aufwickeln des Rollostoffs von einer Abdeckposition in seine Verstauposition erfolgt eine Drehmomentübertragung von dem Endstück 9, genauer von der an diesem ausgebildeten nicht sichtbaren Nase, über die Anzahl an eingebrachten Schaltscheiben 7 auf das Gehäuseteil 6. Das Drehmoment wird dabei von einer jeweiligen Schaltscheibe, d.h. genauer einer jeweiligen Nase, an die Nase der jeweils nächsten Schaltscheibe 7 übertragen. Durch die Formgebung der Nase, insbesondere durch die Bemessung des Nasen-Winkels α, wird erreicht, dass die Momentenübertragung erst nach einem Drehwinkel von 360°-α der Nase erfolgt. Bei dem federgetriebenen Aufwickeln des Rollostoffs werden somit alle Schaltscheiben 7 nacheinander in Eingriff gebracht und erst in einem Endbereich der Rolloaufwicklung wird eine momentenschlüssige Verbindung zu dem Torsions-Viskodämpfer 2, d.h. dem Gehäuseteil 6, hergestellt. Durch Verdrehung des Gehäuseteils 6 aufgrund des von der Nase 20 ausgeübten Drehmoments gegenüber dem drehfest gelagerten Bauteil des Torsions-Viskodämpfers, erfolgt eine Dämpfung und damit eine Reduktion der Drehgeschwindigkeit der Wickelwelle innerhalb eines vorgegebenen Drehwinkels bis zum Stillstand der Wickelwelle.

Die Dämpfung erfolgt somit durch Verdrehen der Gehäuseteile 5,6 gegenüber dem konzentrisch zu diesen Bauteilen im Inneren gelegenen anderen Bauteil des Torsions-Viskodämpfers.

Durch die Anzahl der Schaltscheiben 7 sowie durch die Größe des Nasen-Winkels α der Nasen 8,19 wird festgelegt, wie viele Umdrehungen die Wickelwelle 1 ohne Dämpfung zurücklegt, bis ein Eingriff mit dem Torsions-Viskodämpfer 2 erfolgt. Je größer die Anzahl der Schaltscheiben 7 und/oder je kleiner der Nasen-Winkel α der Nasen 8,19, desto größer ist die Anzahl der Umdrehungen der Wickelwelle ohne Dämpfung und somit der von dem Rollostoff zurückgelegte Weg zwischen seiner Abdeckposition und seiner Verstauposition ohne Dämpfung. Durch geeignete Wahl der Anzahl der Schaltscheiben und der Bemessung der Nasen-Winkel α kann somit eine adaptive Anordnung an verschiedene Laderaumtiefen oder an verschiedene Dämpfungswege vorgenommen werden.

Bei der in Figur 1 gezeigten Variante ist eine Dämpfung innerhalb eines Winkels von kleiner als 360° vorgesehen, wodurch sich in der Praxis ein Dämpfungsweg von bis zu 10 cm ergibt. Um den Dämpfungsweg zu erhöhen, besteht die Möglichkeit, die Dämpfung auch über mehrere Umdrehungen der Wickelwelle 1 vorzunehmen, indem entsprechend der obigen Beschreibung ausgebildete Schaltscheiben zwischen dem den Vorsprung 14 tragenden Bauateil 13 und dem den Anschlag 16, aufweisenden Bauteil in dem Torsions-Viskodämpfer vorgesehen werden.

In Figur 3 ist ein vergrößerter Ausschnitt eines Teils der zur Dämpfung verwendeten Anordnung dargestellt, wobei der Torsions-Viskodämpfer, genauer dessen Gehäuseteile 5, 6 sowie das nicht drehbare Bauteil, nicht zu erkennen sind. Die Figur zeigt ein Gehäuseteil 13, an dem ein lediglich beispielhaft stiftförmiger Vorsprung 14 angeordnet ist. Das Gehäuseteil 13 und der Vorsprung 14 können einstückig, z.B. aus einem Kunststoff, gefertigt sein. Das Gehäuseteil 13 ist mit dem drehbaren Teil des Torsions-Viskodämpfers (Gehäuseteile 5, 6) formschlüssig verbunden. Der nicht drehbare Teil des Torsions-Viskodämpfers ist in der als Langloch ausgebildeten Aufnahme 16 drehfest gegenüber dem Befestigungselement 3 und damit dem Karosseriebauteil des Fahrzeuges gelagert. Ein Anschlag 15 ist ferner mit dem die Aufnahme 16 bildenden Bauteil karosseriefest verbunden. In der in der Figur dargestellten Stellung befindet sich die Anordnung in ihrer Ausgangsstellung, wobei das Bauteil 13 durch eine Federvorspannung einer in einer Nut 12 dieses Gehäuseteils 13 und einer Nut 22 eines drehfesten Gehäuseteils 21 widergelagerten Schenkelfeder gegen den Anschlag 15 gepresst wird.

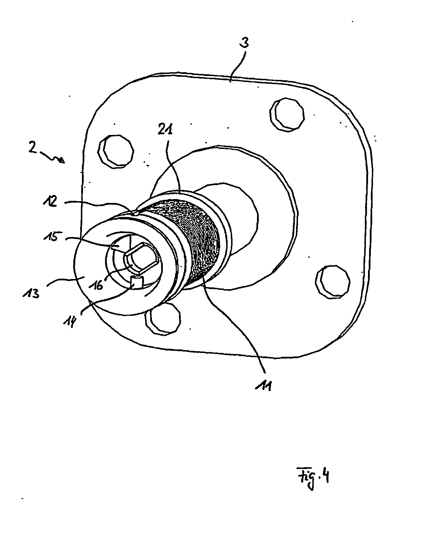

Wird das Gehäuse des Torsions-Viskodämpfers aufgrund eines federgetriebenen Aufwickelns des Rollostoffs und damit einer Drehung der Wickelwelle mit einem Drehmoment beaufschlagt, so verdreht sich das Gehäuseteil 13 mit der daran angeformten Nase im Gegenuhrzeigersinn gegen die Federspannung einer Schenkelfeder 11 in die in Figur 4 gezeigte Betriebsstellung. Diese könnte beispielsweise die Endstellung darstellen, in welcher der Rollostoff seine Verstauposition vollständig erreicht hat. Die Endstellung könnte auch dadurch gebildet sein, dass das Gehäuseteil 13 mit dem daran befestigten Vorspruch 14 bis an die andere Fläche des Anschlags 15 in Kontakt gebracht wird.

Durch das Verdrehen des Gehäuseteils 13 von dem Anschlag 15 weg im Gegenuhrzeigersinn gegen das Vorspannmoment der Schenkelfeder 11 findet eine Dämpfung der Drehung statt. In der in Figur 4 gezeigten Darstellung ist die Schenkelfeder 11 somit mit einem Federmoment belastet, welches zum Rückstellen des Torsions-Viskodämpfers verwendet wird.

Beim Abwickeln des Rollostoffs von seiner Verstauposition in Richtung seiner Abdeckposition endet die Kraftübertragung zwischen der Wickelwelle und dem Torsions-Viskodämpfer, wodurch auch auf das Gehäuseteil 13 keine Kraft mehr ausgeübt wird. Die Schenkelfeder 11 dreht damit aufgrund ihres Federmoments das Gehäuseteil 13 von der in Figur 4 gezeigten Stellung in die in Figur 3 gezeigte Ausgangsstellung zurück. Hierdurch ist sichergestellt, dass beim nächsten Aufwickelvorgang des Rollostoffs die Dämpfung und Geschwindigkeitsverringerung beim Aufwickeln am Ende eines Aufwickelvorganges in identischer Weise erfolgen kann, wie vorher beschrieben.

Prinzipiell ist es ausreichend, die beschriebene Dämpfungsvorrichtung an einem Ende der Wickelwelle vorzusehen, wodurch an dem anderen Ende der Wickelwelle der Federantrieb zum Aufwickeln des Rollostoffs bereitgestellt werden kann. Sofern die Aufwicklung konstruktiv auf andere Weise erfolgt, kann das Dämpfungsmittel auch an beiden Enden der Wickelwelle vorgesehen sein. Hierdurch ist insbesondere eine gestufte Dämpfung denkbar, in der zunächst ein Aufwickeln ohne Dämpfung, ein weiteres Aufwickeln mit einer ersten Dämpfung und schließlich ein Aufwickeln mit einer zweiten, stärkeren Dämpfung erfolgen kann. Dies kann beispielsweise durch das Vorsehen einer unterschiedlichen Anzahl an Schaltscheiben in den beiden Dämpfungsmitteln erfolgen.

### Bezugszeichenliste

- 1: Wickelwelle
- 2: Dämpfungsmittel
- 3: Befestigungselement
- 4: Drehlager
- 5: Gehäuseteil
- 6: Gehäuseteil
- 7: Schaltscheibe
- 8: Nase
- 9: Endstück
- 10: Befestigungselement
- 11: Schenkelfeder
- 12: Nut
- 13: Gehäuseteil
- 14: Vorsprung
- 15: Anschlag
- 16: Aufnahme
- 17: Sektorfläche
- 18: Drehachse
- 19: Nase
- 20: Nase
- 21: Gehäuseteil
- 22: Nut
- α: Winkel

## Patentansprüche

1. Rolloanordnung, insbesondere Laderaumabdeckung für den Laderaum eines Fahrzeugs, mit einem Rollostoff, der auf einer Wickelwelle (1) zwischen einer Abdeckposition und einer Verstauposition aufwickelbar ist, wobei eine Dämpfungsvorrichtung (2) vorgesehen ist, die zum definierten, geschwindigkeitsreduzierten Einfahren des Rollostoffs in die Verstauposition am Ende eines Aufwickelvorgangs dient, wobei die Dämpfungsvorrichtung (2) dazu ausgebildet ist, die Drehgeschwindigkeit der Wickelwelle (1) zu verringern, und die Drehung der Wickelwelle (1) innerhalb eines vorgegebenen Drehwinkels der Wickelwelle (1) zum Stillstand zu bringen,
**dadurch gekennzeichnet, dass**
die Dämpfungsvorrichtung ein Dämpfungsmittel (2) umfasst, das ein in der Wickelwelle (1) angeordneter Torsions-Viskodämpfer mit einem ersten Bauteil und einem zweiten gegen das erste Bauteil verdrehbaren Bauteil (5,6,13) ist, wobei das erste Bauteil, gegen Verdrehung gesichert, an einem Karosseriebauteil befestigbar ist und das zweite Bauteil (5,6,13) zur Übertragung eines Drehmomentes in Wirkverbindung mit der Wickelwelle (1) bringbar ist; wobei die Wirkverbindung zwischen der Wickelwelle (1) und dem zweiten Bauteil (5,6,13) durch ein mit der Wickelwelle (1) drehfest verbundenes Endstück (9) und eine Anzahl an gegenüber der Wickelwelle (1) verdrehbaren Schaltscheiben (7) herstellbar ist.

2. Rolloanordnung nach Anspruch 1, **dadurch gekennzeichnet, dass** jede der Schaltscheiben (7) an ihren beiden, den angrenzenden Scheiben gegenüberliegenden Seiten Nasen (8,19) aufweist, die zur Übertragung eines Drehmoments auf die jeweilige Nase (8,19) der jeweils nächsten Schaltscheibe (7) ausgebildet sind.

3. Rolloanordnung nach Anspruch 2, **dadurch gekennzeichnet, dass** die Nasen (8,19) die Gestalt eines Kreissektors mit einem Nasen-Winkel aufweisen, so dass bei einer Momentenübertragung ein flächiger Kontakt zwischen der Nase (19) einer Schaltscheibe (7) und der Nase (8) der jeweils nächsten Schaltscheibe (7) hergestellt ist.

4. Rolloanordnung nach einem der Ansprüche 2 bis 3, **dadurch gekennzeichnet, dass** die Anzahl der Schaltscheiben (7) und die Gestalt der Nasen (8,19), insbesondere der Nasen-Winkel der kreissektorförmigen Nasen, von dem gewünschten zu dämpfenden Weg beim Einzug des Rollostoffs von der Abdeckposition in die Verstauposition am Ende eines Aufwickelvorgangs abhängig ist.

5. Rolloanordnung nach einem der Ansprüche 2 bis 4, **dadurch gekennzeichnet, dass** das zweite Bauteil (5,6,13) des Torsions-Viskodämpfers eine Nase (20) aufweist, die zwischen einer Ausgangsstellung und einer Endstellung verdrehbar ist und bei Verdrehung eine Dämpfung der Drehung der Wickelwelle (1) bewirkt, wobei eine Verdrehung von der Ausgangsstellung in die Endstellung durch Eingriff mit einer Nase (19) einer der Schaltscheiben erfolgt.

6. Rolloanordnung nach einem der vorherigen Ansprüche, **dadurch gekennzeichnet, dass** ein Rückstellmittel (11) vorgesehen ist, das das Dämpfungsmittel (2) in einen Ausgangszustand versetzt, wenn der Rollostoff von seiner Verstauposition in die Abdeckposition gebracht wird, so dass beim nächsten Einfahren des Rollostoffs von der Abdeckposition in die Verstauposition die definierte Geschwindigkeitsreduktion bereit gestellt ist.

7. Rolloanordnung nach Anspruch 6, **dadurch gekennzeichnet, dass** das Rückstellmittel (11) das zweite Bauteil (5,6,13) des Torsions-Viskodämpfers von der Endstellung in die Ausgangsstellung bringt, wenn der Rollostoff von seiner Verstauposition in die Abdeckposition gebracht wird.

8. Rolloanordnung nach Anspruch 6 oder 7, **dadurch gekennzeichnet, dass** das Rückstellmittel (11) als Schenkelfeder ausgebildet ist, die konzentrisch zu dem Dämpfungsmittel (2) angeordnet ist und das erste Bauteil des Torsions-Viskodämpfers umschließt.

9. Rolloanordnung nach Anspruch 7 oder 8, **dadurch gekennzeichnet, dass** das Rückstellmittel (11) auf das zweite Bauteil (5,6,13) des Torsions-Viskodämpfers eine Vorspannkraft ausübt, wenn das zweite Bauteil (5,6,13) sich in der Ausgangsstellung befindet.

## Claims

1. Roller-blind system, in particular trunk covering for the trunk of a vehicle, with a roller-blind material which can be wound up on a winding shaft (1) between a covering position and a stowed position, wherein a damping apparatus (2) is provided which serves for the defined, speed-reduced retraction of the roller-blind material into the stowed position at the end of a winding-up operation, the damping apparatus (2) being designed in order to reduce the rotational speed of the winding shaft (1) and to bring the rotation of the winding shaft (1) to a standstill within a predetermined angle of rotation of the winding shaft (1), **characterized in that** the damping apparatus has a damping means (2) which is a torsional viscous damper which is arranged in the winding shaft (1) and which has a first component and a second component (5, 6, 13) which is rotatable toward the first component, the first component, which is secured against rotation, being able to be fastened to a bodywork component and the second component (5, 6, 13) being able to be brought into operative connection with the winding shaft (1) in order to transmit a torque; wherein the operative connection between the winding shaft (1) and the second component (5, 6, 13) can be produced by an end piece (9), which is connected in a rotationally fixed manner to the winding shaft (1), and a number of control disks (7) which are rotatable in relation to the winding shaft (1).

2. Roller-blind system according to Claim 1, **characterized in that** each of the control disks (7) has, on both its sides opposite the adjoining disks, lugs (8, 19) which are designed in order to transmit a torque to each lug (8, 19) of the next control disk (7) in each case.

3. Roller-blind system according to Claim 2, **characterized in that** the lugs (8, 19) are in the form of a sector of a circle with a lug angle such that, during a transmission of torque, a planar contact is produced between the lug (19) of a control disk (7) and the lug (8) of the next control disk (7) in each case.

4. Roller-blind system according to either of Claims 2 and 3, **characterized in that** the number of control disks (7) and the design of the lugs (8, 19), in particular of the lug angles of the lugs which are in the shape of a sector of a circle, are dependent on the desired distance to be damped during the retraction of the roller-blind material from the covering position into the stowed position at the end of a winding-up operation.

5. Roller-blind system according to one of Claims 2 to 4, **characterized in that** the second component (5, 6, 13) of the torsional viscous damper has a lug (20) which is rotatable between a starting position and an end position and, when rotated, brings about a damping of the rotation of the winding shaft (1), with rotation from the starting position to the end position taking place by means of engagement with a lug (19) of one of the control disks.

6. Roller-blind system according to one of the preceding claims, **characterized in that** a resetting means (11) is provided which sets the damping means (2) into a starting state when the roller-blind material is brought from its stowed position into the covering position, and therefore, during the next retraction of the roller-blind material from the covering position into the stowed position, the defined speed reduction is provided.

7. Roller-blind system according to Claim 6, **characterized in that** the resetting means (11) brings the second component (5, 6, 13) of the torsional viscous damper from the end position into the starting position when the roller-blind material is brought from its stowed position into the covering position.

8. Roller-blind system according to Claim 6 or 7, **characterized in that** the resetting means (11) is designed as a leg spring which is arranged concentrically with respect to the damping means (2) and surrounds the first component of the torsional viscous damper.

9. Roller-blind system according to Claim 7 or 8, **characterized in that** the resetting means (11) exerts a prestressing force on the second component (5, 6, 13) of the torsional viscous damper when the second component (5, 6, 13) is in the starting position.

## Revendications

1. Système de store, en particulier couverture d'espace de chargement pour l'espace de chargement d'un véhicule, avec une toile de store qui peut être enroulée sur un arbre d'enroulement (1) entre une position de recouvrement et une position de rangement, dans lequel il est prévu un dispositif d'amortissement (2) qui sert pour l'introduction définie à vitesse réduite de la toile de store dans la position de rangement à la fin d'une opération d'enroulement, dans lequel le dispositif d'amortissement (2) est configuré pour réduire la vitesse de rotation de l'arbre d'enroulement (1) et amener à l'arrêt la rotation de l'arbre d'enroulement (1) à l'intérieur d'un angle de rotation prédéterminé de l'arbre d'enroulement (1), **caractérisé en ce que** le dispositif d'amortissement comprend un moyen d'amortissement (2), qui est un visco-amortisseur de torsion disposé dans l'arbre d'enroulement (1) avec un premier élément et un deuxième élément (5, 6, 13) pouvant tourner par rapport au premier élément, dans lequel le premier élément, empêché de tourner, peut être fixé à un élément de carrosserie et le deuxième élément (5, 6, 13) peut être mis en liaison active avec l'arbre d'enroulement (1) pour la transmission d'un couple de rotation ; la liaison active entre l'arbre d'enroulement (1) et le deuxième élément (5, 6, 13) pouvant être réalisée au moyen d'une pièce d'extrémité (9) solidaire de l'arbre d'enroulement (1) et de plusieurs disques d'enclenchement (7) pouvant tourner par rapport à l'arbre d'enroulement (1).

2. Système de store selon la revendication 1, **caractérisé en ce que** chacun des disques d'enclenchement (7) présente sur ses deux côtés opposés aux disques adjacents des ergots (8, 19), qui sont configurés pour la transmission d'un couple de rotation à l'ergot (8, 19) du disque d'enclenchement respectivement adjacent (7).

3. Système de store selon la revendication 2, **caractérisé en ce que** les ergots (8, 19) présentent la forme d'un secteur circulaire avec un angle d'ergot, de telle manière que, lors d'une transmission de couple, il s'établisse un contact à plat entre l'ergot (19) d'un disque d'enclenchement (7) et l'ergot (8) du disque d'enclenchement respectivement adjacent (7).

4. Système de store selon l'une quelconque des revendications 2 à 3, **caractérisé en ce que** le nombre des disques d'enclenchement (7) et la forme des ergots (8, 19), en particulier l'angle d'ergot des ergots en forme de secteurs circulaires, dépendent de la course souhaitée à amortir lors de la rentrée de la toile de store de la position de recouvrement à la position de rangement à la fin d'une opération d'enroulement.

5. Système de store selon l'une quelconque des revendications 2 à 4, **caractérisé en ce que** le deuxième élément (5, 6, 13) du visco-amortisseur de torsion présente un ergot (20), qui peut tourner entre une position initiale et une position finale et provoque un amortissement de la rotation de l'arbre d'enroulement (1) lors d'une rotation, dans lequel une rotation de la position initiale à la position finale est effectuée par engagement avec un ergot (19) d'un des disques d'enclenchement.

6. Système de store selon l'une quelconque des revendications précédentes, **caractérisé en ce qu'**il est prévu un moyen de rappel (11), qui déplace le moyen d'amortissement (2) dans une situation initiale, lorsque la toile de store est amenée de sa position de rangement à sa position de recouvrement, de telle manière que la réduction de vitesse définie soit déjà réglée lors de la rentrée suivante de la toile de store de la position de recouvrement à la position de rangement.

7. Système de store selon la revendication 6, **caractérisé en ce que** le moyen de rappel (11) amène le deuxième élément (5, 6, 13) du visco-amortisseur de torsion de la position finale à la position initiale, lorsque la toile de store est amenée de sa position de rangement à sa position de recouvrement.

8. Système de store selon la revendication 6 ou 7, **caractérisé en ce que** le moyen de rappel (11) se présente sous la forme d'un ressort spiralé, qui est disposé de façon concentrique au moyen d'amortissement (2) et entoure le premier élément du visco-amortisseur de torsion.

9. Système de store selon la revendication 7 ou 8, **caractérisé en ce que** le moyen de rappel (11) exerce une force de précontrainte sur le deuxième élément (5, 6, 13) du visco-amortisseur de torsion, lorsque le deuxième élément (5, 6, 13) se trouve dans la position initiale.
